# EUROPÄISCHE PATENTANMELDUNG

(11) **EP 3 961 585 A1**
(43) Veröffentlichungstag der Anmeldung: **02.03.2022**
(21) Anmeldenummer: 21189553.7
(22) Anmeldetag: 04.08.2021
(51) Int. Cl.: G07C 5/00, G07C 5/08

(54) **VERFAHREN ZUR ÜBERPRÜFUNG EINES ZUSTANDES EINER MOBILEN NUTZEINHEIT ODER EINER WARTUNGSSTATION**

(30) Priorität: 26.08.2020 DE 102020122304
(71) Anmelder: Deere & Company, Moline, IL 61265 (US)
(72) Erfinder: FRITZ, NORBERT, 68163 Mannheim (DE); KREMMER, MARTIN, 68163 Mannheim (DE)
(74) Vertreter: Dehnhardt, Florian Christopher

(57) **Zusammenfassung**

Die Erfindung betrifft ein Verfahren zur Überprüfung eines aktuellen Zustandes (Stat_akt) einer mobilen Nutzeinheit (10) mittels einer Wartungsstation (12) oder eines aktuellen Zustandes einer Wartungsstation (12) zur Wartung einer mobilen Nutzeinheit (10). Es werden einen aktuellen Zustand (Stat_akt) repräsentierende aktuelle Zustandsdaten (D_akt, d_akt, mark_akt) generiert. Die aktuellen Zustandsdaten (D_akt, d_akt, mark_akt) werden mit bereitgestellten und einen Referenzzustand repräsentierenden Referenzdaten (D_ref, d_ref, mark_ref) verglichen. In Abhängigkeit von dem Vergleichsergebnis (**Δ**comp) wird eine den aktuellen Zustand (Stat_akt) betreffende Information (Info_akt) ausgegeben.

## Beschreibung

Die Erfindung betrifft ein Verfahren zur Überprüfung eines aktuellen Zustandes einer mobilen Nutzeinheit mittels einer Wartungsstation oder eines aktuellen Zustandes einer Wartungsstation, welche zur Wartung einer mobilen Nutzeinheit eingesetzt wird.

Mobile Nutzeinheiten, wie z.B. land- oder forstwirtschaftliche Maschinen, werden üblicherweise in definierten Zeitintervallen gewartet und dabei auch hinsichtlich des aktuellen Zustandes verschiedener technischer Funktionen überprüft.

Der vorliegenden Erfindung liegt die Aufgabe zugrunde, eine Zustandsüberprüfung für eine mobile Nutzeinheit oder für eine die mobile Nutzeinheit wartende Wartungsstation effizient durchzuführen.

Diese Aufgabe wird durch ein Verfahren mit den Merkmalen des Patentanspruchs 1 gelöst.

Das Verfahren gemäß Patentanspruch 1 dient der Überprüfung eines aktuellen Zustandes einer mobilen Nutzeinheit mittels einer Wartungsstation. Alternativ dient das Verfahren der Überprüfung eines aktuellen Zustandes einer Wartungsstation, welche zur Wartung einer mobilen Nutzeinheit verwendet wird. Bei dem Verfahren werden aktuelle Zustandsdaten generiert, welche einen aktuellen Zustand der mobilen Nutzeinheit oder der Wartungsstation repräsentieren. Die generierten aktuellen Zustandsdaten werden mit bereitgestellten Referenzdaten (im Sinne eines Referenzzustandes) verglichen. Das Vergleichsergebnis kann beispielsweise eine mathematische Differenz zwischen den Referenzdaten und den aktuellen Zustandsdaten sein.

In Abhängigkeit von dem Vergleichsergebnis wird eine den aktuellen Zustand betreffende Information ausgegeben.

Die Information enthält insbesondere eine Aussage bezüglich einer qualitativen und/oder quantitativen Abweichung des aktuellen Zustandes (Ist-Zustand) von einem Referenzzustand (Soll-Zustand).

Der aktuelle Zustand bezieht sich insbesondere auf mindestens ein technisches Merkmal, welches für die gewünschte Funktionsfähigkeit der Nutzeinheit oder der Wartungsstation relevant ist.

Die vorgenannten Verfahrensschritte ermöglichen eine einfache Verfahrensstruktur, welche mit geringem datentechnischen Aufwand eine effiziente Überprüfung eines aktuellen Zustandes an der Nutzeinheit oder der Wartungsstation bietet. Außerdem erlauben die vorgenannten Verfahrensschritte eine technisch einfache Automatisierung der gewünschten Überprüfung eines aktuellen Zustandes. Somit ist mit dem Verfahren eine effiziente (Funktions-) Diagnose der mobilen Nutzeinheit oder der Wartungsstation möglich. Für eine Funktions- und Zustandsüberprüfung bzw. Diagnose herkömmlich herangezogenes Wartungspersonal kann entsprechend entlastet werden.

Die Ausgabe einer Information in Abhängigkeit von dem Vergleichsergebnis beinhaltet auch die Möglichkeit, dass bei bestimmten Vergleichsergebnissen die Ausgabe einer Information unterbleibt. Vorteilhaft wird auf die Ausgabe einer Information dann verzichtet, wenn das Vergleichsergebnis einen aktuellen Zustand repräsentiert, welcher definitionsgemäß keine weitere Maßnahmen (z.B. zusätzliche Inspektion, Reparatur, Austausch von Bauteilen) an der mobilen Nutzeinheit oder an der Wartungsstation erfordert. Somit wird ein Anwender im Sinne einer datensparsamen und effizienten Kommunikation insbesondere nur dann informiert, wenn nach der Überprüfung des aktuellen Zustandes weitere Maßnahmen tatsächlich erforderlich sind.

Um die Genauigkeit des Vergleichsergebnisses zu erhöhen, sind spezifische äußere Bedingungen (z.B. Lichtverhältnisse, Relativposition der Wartungsstation, Relativposition der Nutzeinheit) bei der Generierung von aktuellen Zustandsdaten einerseits und bei der Generierung von Referenzdaten andererseits vorzugsweise identisch oder annähernd identisch.

Weitere vorteilhafte Ausgestaltungen des erfindungsgemäßen Verfahrens gehen aus den Unteransprüchen hervor.

Vorzugsweise wird eine Information dann ausgegeben, wenn das Vergleichsergebnis einen vorbestimmten Grenzwert überschreitet oder unterschreitet. Somit kann mittels des Grenzwertes verfahrenstechnisch einfach entschieden werden, ob der aktuelle Zustand der Nutzeinheit bzw. der Wartungsstation in Ordnung ist (das Vergleichsergebnis überschreitet oder unterschreitet nicht den Grenzwert) und deshalb keine Informationsausgabe erforderlich ist oder ob der aktuelle Zustand der Nutzeinheit bzw. der Wartungsstation mängel- oder fehlerbehaftet ist (das Vergleichsergebnis überschreitet oder unterschreitet den Grenzwert) und deshalb eine Information ausgegeben wird. Dies unterstützt eine effiziente Kommunikation mit dem Anwender. Außerdem ermöglicht die Berücksichtigung eines Grenzwertes eine technisch einfache spezifische Justierung der Mängeltoleranz des Verfahrens abhängig von der zu überprüfenden Nutzeinheit bzw. Wartungsstation.

In einer bevorzugten Ausführungsform wird das Vergleichsergebnis in einem neuronalen Netzwerk verarbeitet, bevor eine Information ausgegeben wird. In dem neuronalen Netzwerk kann das Vergleichsergebnis mit hoher Genauigkeit analysiert und verarbeitet werden. Eine derartige künstliche Intelligenz benötigt lediglich eine spezifische Definitionsphase und eine spezifische Lernphase (Trainingshase), bis diese unterschiedliche Vergleichsergebnisse hinreichend genau interpretieren kann. Hierdurch kann mit geringem technischen Aufwand eine differenziertere Analyse und Auswertung des Vergleichsergebnisses vorgenommen werden. Entsprechend differenzierter kann auch der Inhalt der ausgegebenen Information sein, z.B. Hinweise auf fehlende Bauteile, Beschädigungen oder Brüche an der Nutzeinheit, fehlerhafte Positionen oder Ausrichtungen von Bauteilen an der Nutzeinheit.

Unabhängig von einer spezifischen Ermittlung oder Verarbeitung des Vergleichsergebnisses betrifft die ausgegebene Information mindestens einen der folgenden aktuellen Zustände:
- das Fehlen mindestens eines Bauteiles an der Nutzeinheit,
- einen Beschädigungsstatus an der Nutzeinheit,
- einen Verschleißstatus an der Nutzeinheit,
- einen Zustand einer Sensorik an der Nutzeinheit,
- einen Zustand einer Sensorik an der Wartungsstation,
- einen Zustand einer Aktuatorik an der Nutzeinheit,
- einen Zustand einer Aktuatorik an der Wartungsstation.

Derart differenzierte Informationen sind für den Anwender bzw. für eine mit der technischen Wartung betraute Person eine vorteilhafte Unterstützung, um Wartungs- oder Reparaturmaßnahmen zielgerichtet und effizient durchführen zu können.

Der vorgenannte Beschädigungsstatus kann sowohl die bloße Tatsache einer Beschädigung oder auch einen definierten Grad einer Beschädigung beinhalten.

Der vorgenannte Verschleißstatus kann insbesondere für Verschleißteile an einem Anbaugerät (z.B. Pflug oder ein anderes Bodenbearbeitungsgerät) als mobile Nutzeinheit genutzt werden. Verschleißteile sind oftmals mit einer (vorzugsweise eingravierten) Verschleißmarkierung ausgestattet, um einen Verschleiß zu erkennen. Für den Status des Verschleißes kann dann beispielsweise ein Abstand einer Kante des Verschleißteiles zu der Markierung, die bloße Existenz der Markierung oder die Abwesenheit der Markierung als aktuelle Zustandsdaten generiert werden.

Mit dem vorgenannten aktuellen Zustand einer Sensorik an der Nutzeinheit ist beispielsweise die von einem Referenzzustand abweichende aktuelle Position oder Ausrichtung der Sensorik gemeint. Gleiches gilt für den aktuellen Zustand einer Sensorik an der Wartungsstation.

Der vorgenannte aktuelle Zustand einer Aktuatorik an der Nutzeinheit bzw. der Wartungsstation kann sich auf eine Abweichung von einem spezifikationsgemäß zu erwartenden Betriebsverhalten der Aktuatorik als Referenzzustand beziehen. Hierzu werden entsprechende Befehle an die Aktuatorik gesendet sowie deren Reaktion erfasst. Im Falle einer als Traktor ausgebildeten mobilen Nutzeinheit kann es sich bei der Aktuatorik insbesondere um ein Hubwerk in Gestalt eines hydraulischen Krafthebers oder eine Zapfwelle bzw. einen Zapfwellenantrieb handeln.

In einer bevorzugten Ausführungsform wird der aktuelle Zustand der Nutzeinheit oder der Wartungsstation mittels einer Sensorik überprüft. Besonders geeignet ist vorzugsweise eine optische Sensorik, z.B. mindestens eine Kamera.

Vorzugsweise ist die Sensorik an der Wartungsstation angeordnet und dient zur Überprüfung eines aktuellen Zustandes der mobilen Nutzeinheit. Die von dieser Sensorik generierten aktuellen Zustandsdaten (z.B. Bilddaten) repräsentieren dann einen aktuellen Zustand der Nutzeinheit. Die bereitgestellten Referenzdaten repräsentieren einen Referenzzustand der Nutzeinheit. Auf diese Weise kann effizient eine qualitative und/oder quantitative Abweichung des aktuellen Zustandes der mobilen Nutzeinheit von einem gewünschten Soll-Zustand bzw. Referenzzustand festgestellt werden.

Der Referenzzustand der Nutzeinheit wird vorzugsweise durch eine Referenzliste repräsentiert, welche die Kennungen (z.B. eines sogenannten RFID-Tags) von Bauteilen in einem Referenzzustand (z.B. Zeitpunkt der vollständigen Herstellung) der Nutzeinheit, also vor ihrer Zustandsüberprüfung, enthält. Insbesondere enthält diese Referenzliste die Kennungen sämtlicher für die geplante Zustandsüberprüfung relevanten Bauteile der Nutzeinheit. Während der Überprüfung des aktuellen Zustandes der Nutzeinheit kann dann mittels einer geeigneten Sensorik (z.B. eine oder mehrere RFID-Antennen) eine aktuelle Liste der Kennungen von aktuell vorhandenen Bauteilen der Nutzeinheit generiert werden. Diese aktuelle Liste ist (allein oder gemeinsam mit weiteren Daten) Bestandteil aktueller Zustandsdaten. Mittels des verfahrensgemäßen Vergleichsergebnisses kann dann ohne besonderen technischen Aufwand eindeutig festgestellt werden, ob ein oder mehrere Bauteile an der Nutzeinheit fehlen. Darüber hinaus können aus von der Referenzliste abweichenden Kennungen in der aktuellen Liste Rückschlüsse gezogen werden hinsichtlich eines nicht ordnungsgemäßen (z.B. unerlaubten oder manipulativen) Austausches von Bauteilen an der Nutzeinheit.

Vorzugsweise wird als aktueller Zustand der Nutzeinheit oder der Wartungsstation der aktuelle Zustand einer Sensorik überprüft, da die jeweilige Sensorik einen signifikanten Einfluss auf die Funktionsfähigkeit der Nutzeinheit (z.B. als teilautonomes oder vollautonomes Fahrzeug) oder auf die Funktionsfähigkeit der Wartungsstation (z.B. deren Qualität der Zustandsüberprüfung bezüglich der Nutzeinheit) haben kann.

In einer bevorzugten Ausführungsform ist die zu überprüfende Sensorik an der Wartungsstation angeordnet. Der aktuelle Zustand dieser Sensorik lässt sich zuverlässig und mit geringem technischen Aufwand überprüfen, indem die Sensorik selbst aktuelle Zustandsdaten (z.B. Bilddaten) generiert, welche eine empfangene Prüfinformation repräsentieren und indem die bereitgestellten Referenzdaten einen Referenzzustand der Sensorik bezüglich derselben Prüfinformation repräsentieren.

Die Prüfinformation ist beispielsweise ein dreidimensionaler Gegenstand oder eine zweidimensionale Bildinformation bzw. ein optisches Muster. Abhängig von einer beweglichen oder unbeweglichen Ausgestaltung der Wartungsstation kann während der Überprüfung entweder die Sensorik relativ in Richtung der Prüfinformation bewegt werden oder die Prüfinformation relativ in Richtung der Sensorik bewegt werden.

Die bereitgestellten Referenzdaten werden vorzugsweise generiert, indem dieselbe Sensorik in einem Referenzzustand, d.h. in einem definierten, technisch fehlerfreien Zustand dieselbe Prüfinformation erfasst. Die erfassten und gegebenenfalls verarbeiteten Daten können dann als Referenzdaten abgespeichert und für den verfahrensgemäßen Vergleich mit den aktuellen Zustandsdaten wieder abgerufen werden. Somit ist eine technisch einfache Eigendiagnose der Wartungsstation möglich.

Um die Genauigkeit des Vergleichsergebnisses zu erhöhen, sind spezifische äußere Bedingungen (z.B. Belichtung, Lichtverhältnisse, Relativposition der Wartungsstation zur Nutzeinheit, Relativposition der Prüfinformation, Bewegungen der Prüfinformation) bei einer Generierung der aktuellen Zustandsdaten einerseits und einer Generierung der Referenzdaten andererseits vorzugsweise identisch.

In einer anderen bevorzugten Ausführungsform ist die zu überprüfende Sensorik an der mobilen Nutzeinheit angeordnet. Für die Überprüfung generiert diese Sensorik in Abhängigkeit von einer empfangenen Testinformation aktuelle Zustandsdaten. Die bereitgestellten Referenzdaten repräsentieren einen Referenzzustand derselben Sensorik bezüglich derselben empfangenen Testinformation. Mit anderen Worten hat dieselbe Sensorik in einem Referenzzustand, d.h. in einem definierten, technisch fehlerfreien Zustand dieselbe Testinformation erfasst.

Die vorgenannte Testinformation erlaubt eine zuverlässige Zustandsüberprüfung einer Sensorik der Nutzeinheit mit geringem technischen Aufwand. Die Testinformation kann z.B. ein elektronisches Signal, ein Bild, ein optisches Muster oder einen bewegten Gegenstand enthalten. Die Testinformation wird vorzugsweise durch die Wartungsstation zur Verfügung gestellt. Die Testinformation kann an einer definierten Raumposition vorhanden sein oder im Raum bewegt werden.

Um die Genauigkeit des Vergleichsergebnisses zu erhöhen, sind auch hier spezifische äußere Bedingungen (z.B. Belichtung, Lichtverhältnisse, Relativposition der Nutzeinheit zur Wartungsstation, Relativposition der Testinformation, Bewegungen der Testinformation) bei der Generierung der aktuellen Zustandsdaten einerseits und der Generierung der Referenzdaten andererseits vorzugsweise identisch oder annähernd identisch.

Die Sensorik kann unterschiedliche Sensoren, Fühler oder Signalempfänger enthalten. Besonders geeignet ist vorzugsweise ein optischer Sensor, insbesondere eine Kamera (z.B. Monokular, Stereo). Weitere geeignete Sensoren sind UV-Sensoren, Ultraschall-Sensoren, Radar-Sensoren, Antennen.

Bezüglich der Antennen-Technologie handelt es sich insbesondere um eine RFID-Antenne. Beispielsweise kann diese RFID-Antenne sämtliche mit einer RFID-Kennung (RFID-Tags) gekennzeichneten Bauteile der Nutzeinheit registrieren. Diese aktuell registrierten RFID-Kennungen können dann mit den RFID-Kennungen (Referenzliste) sämtlicher Bauteile der Nutzeinheit im fehlerfreien Zustand (Referenzzustand) verglichen werden. Dieser Vergleich ermöglicht eine technisch einfache Analyse bezüglich etwaiger fehlender oder nicht ordnungsgemäß ausgetauschter Bauteile an der Nutzeinheit.

Vorzugsweise wird der Vergleich zwischen den aktuellen Zustandsdaten und den bereitgestellten Referenzdaten in der Wartungsstation durchgeführt. Alternativ oder zusätzlich wird die den aktuellen Zustand betreffende Information durch die Wartungsstation ausgegeben. Diese Maßnahmen können den apparativen Aufwand zur Durchführung des Verfahrens vorteilhaft begrenzen.

Für einen Vergleich der aktuellen Zustandsdaten mit den Referenzdaten in der Wartungsstation enthält letztere eine geeignete Elektronik, z.B. einen Mikroprozessor, mindestens eine Speichereinheit, eine Signalisierungs- oder Anzeigeeinheit.

Vorteilhaft wird die verfahrensgemäße automatisierte Zustandsüberprüfung in Anwendungsbereichen eingesetzt, in denen spezifische Automatisierungsfunktionen zur Effizienzsteigerung besonders geeignet sind, z.B. in großen landwirtschaftlichen Betrieben oder bei einer (teil-)autonomen Fahrzeugflotte. Bei letzterer kann es sich beispielweise um eine Flotte von Robotern zur mechanischen Unkrautbekämpfung handeln, wie sie bereits im Wein- und Gemüsebau eingesetzt werden.

Vorzugsweise handelt es sich bei der mobilen Nutzeinheit um ein Nutzfahrzeug bzw. eine beliebige mobile Arbeitsmaschine (z.B. landwirtschaftliche oder forstwirtschaftliche Maschine, Baumaschine) und/oder um ein Anbaugerät (z.B. Bodenbearbeitungsgerät, Feldspritze, Sämaschine, Anhänger). Das Anbaugerät kann ebenfalls als eine mobile Nutzeinheit betrachtet werden, soweit es zumindest im Arbeitseinsatz beweglich ist. Insbesondere ist das Anbaugerät an das Nutzfahrzeug (z.B. Traktor) angekoppelt und hierdurch zumindest während des Arbeitseinsatzes des Nutzfahrzeugs beweglich.

Das Nutzfahrzeug ist insbesondere als ein (teil-)autonomes Fahrzeug ausgebildet. Mit den offenbarten Verfahrensschritten lässt sich der Autonomisierungsgrad des Fahrzeugs effizient erhöhen.

Für die Wartungsstation kann es vorteilhaft sein, diese teilweise (neben einem stationären Teilbereich) oder vollständig als eine mobile Wartungseinheit auszugestalten. Die mobile Wartungseinheit kann luftgestützt (z.B. fliegende Drohne) und/oder landgestützt (z.B. beweglicher Roboterarm, fahrendes Service-Vehikel) sein. Eine zumindest teilweise mobile Wartungsstation kann unter bestimmten Rahmenbedingungen eine Zustandsüberprüfung der ausgewählten mobilen Nutzeinheit(en) noch effizienter und ökonomischer durchführen. Dies ist beispielsweise der Fall, wenn die Nutzeinheit Bestandteil einer Fahrzeugflotte ist, welche bezüglich des Zustands sämtlicher Flottenfahrzeuge überprüft werden soll.

Die mobile Wartungseinheit kann auch dazu verwendet werden, auf bestimmte Abdeckungen (z.B. schwenkbarer Deckel) einzuwirken, um dahinter liegende Funktionsbereiche der mobilen Nutzeinheit für eine Zustandsüberprüfung zugänglich zu machen. Zu diesem Zweck kann die mobile Wartungseinheit (z.B. fliegende Drohne, beweglicher Roboterarm) beispielsweise durch elektrische Signale und/oder einen mechanischen Eingriff auf die jeweilige Abdeckung einwirken, um letztere zu öffnen oder zu schließen.

Das erfindungsgemäße Verfahren wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:
- Fig. 1: ein erstes Ausführungsbeispiel des erfindungsgemäßen Verfahrens zur Zustandsüberprüfung einer mobilen Nutzeinheit,
- Fig. 2: ein weiteres Ausführungsbeispiel des erfindungsgemäßen Verfahrens zur Zustandsüberprüfung einer mobilen Nutzeinheit,
- Fig. 3: ein weiteres Ausführungsbeispiel des erfindungsgemäßen Verfahrens zur Zustandsüberprüfung einer mobilen Nutzeinheit,
- Fig. 4: ein weiteres Ausführungsbeispiel des erfindungsgemäßen Verfahrens zur Zustandsüberprüfung einer mobilen Nutzeinheit, und
- Fig. 5: ein Ausführungsbeispiel des erfindungsgemäßen Verfahrens zur Zustandsüberprüfung einer Wartungsstation.

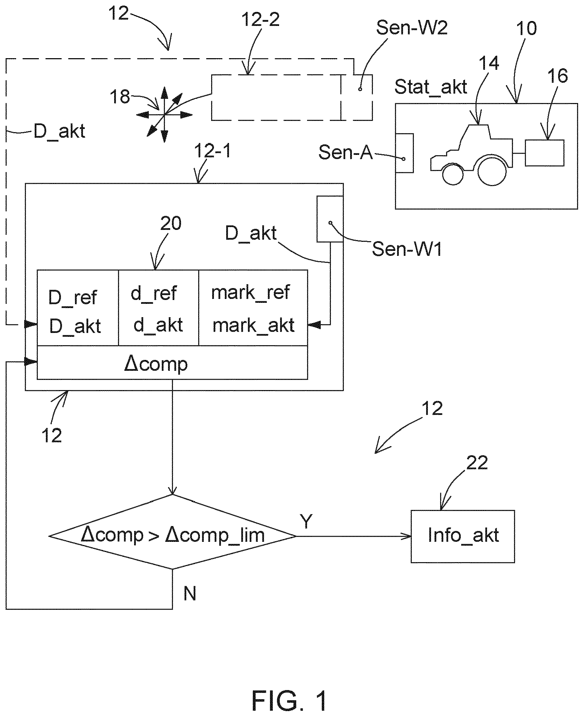

Fig. 1 zeigt eine mobile Nutzeinheit 10, deren aktueller Zustand Stat_akt mittels einer Wartungsstation 12 überprüft wird. Ganz allgemein dient die Wartungsstation 12 zur Wartung und Funktionsüberprüfung der Nutzeinheit 10. Die Nutzeinheit 10 besteht beispielsweise aus einem Traktor 14 und/oder einem daran angekoppelten Anbaugerät 16, z.B. einem Pflug oder einem anderen Bodenbearbeitungsgerät. Alternativ enthält die Nutzeinheit 10 ein forstwirtschaftliches Nutzfahrzeug oder eine Baumaschine.

Die Wartungsstation 12 ermöglicht eine automatisierte Überprüfung eines aktuellen Zustandes Stat_akt der Nutzeinheit 10.

Dies unterstützt nicht nur fahrergesteuerte Traktoren 14, sondern gerade auch (teil-)autonome Traktoren 14.

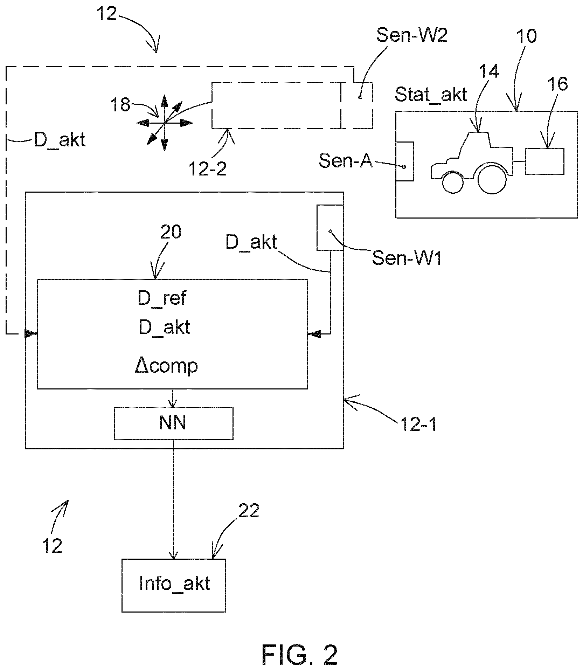

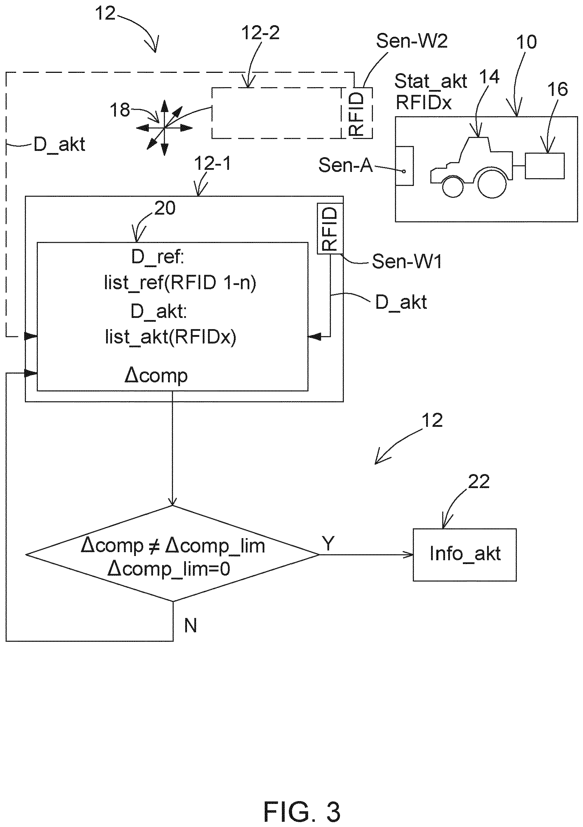

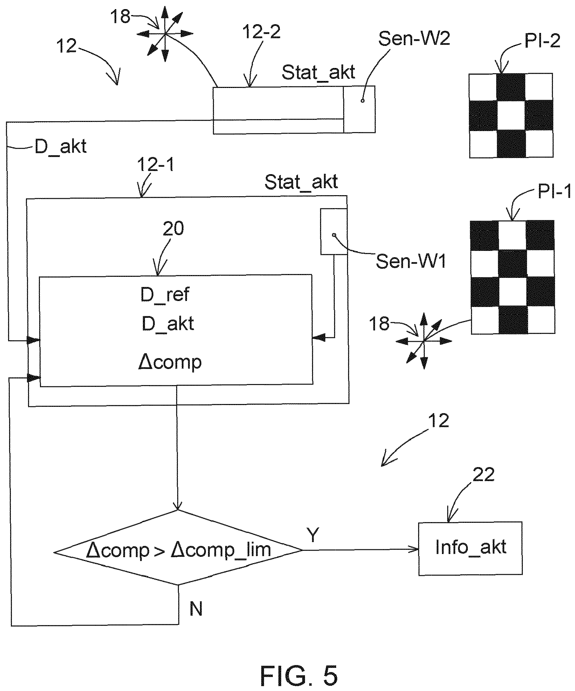

Die Zustandsüberprüfung der Nutzeinheit 10 erfolgt mittels einer an der Wartungsstation 12 angeordneten Wartungssensorik Sen-W1 und/oder Sen-W2. Je nach Ausführungsform enthält die Wartungsstation 12 eine unbeweglich angeordnete, stationäre Wartungseinheit 12-1 und/oder eine mobile Wartungseinheit 12-2. In Fig. 1 sowie auch in Fig. 2 und Fig. 3 ist die mobile Wartungseinheit 12-2 mit gestrichelten Linien dargestellt, um diese als optionalen Bestandteil der Wartungsstation 12 anzudeuten. In Fig. 5 kann die Wartungsstation 12 in einer weiteren Ausführungsform auch ohne die mobile Wartungseinheit 12-2 ausgestaltet sein.

Die mobile Wartungseinheit 12-2 kann in unterschiedliche, insbesondere in sämtliche, Raumrichtungen beweglich sein, was durch die Pfeilrichtungen 18 angedeutet ist. Die mobile Wartungseinheit 12-2 kann für die Zustandsüberprüfung beispielsweise landgestützt als Service-Vehikel die Nutzeinheit 10 entlang einer definierten Fahrtroute umfahren oder luftgestützt als Drohne die Nutzeinheit 10 entlang einer definierten Flugroute umfliegen.

Für die vorgenannte Zustandsüberprüfung generiert die Wartungssensorik Sen-W1 und/oder Sen-W2 aktuelle Zustandsdaten D_akt, welche einen aktuellen Zustand Stat_akt der Nutzeinheit 10 repräsentieren. Hierzu enthält die Wartungssensorik Sen-W1 und/oder Sen-W2 beispielsweise mindestens eine Kamera und generiert dann aktuelle Bilddaten als aktuelle Zustandsdaten D_akt von der Nutzeinheit 10. Alternativ oder zusätzlich kann die Wartungssensorik Sen-W1 und/oder Sen-W2 einen UV-Sensor enthalten, welcher z.B. in Kombination mit einem fluoreszierenden Additiv in Schläuchen (z.B. Hydraulikschläuchen) der Nutzeinheit 10 etwaige Lecks detektieren kann. Weitere geeignete Sensoren für die Wartungssensorik Sen-W1 und/oder Sen-W2 sind beispielsweise Ultraschall-Sensoren, Radar-Sensoren, Antennen, insbesondere RFID-Antennen.

Die generierten aktuellen Zustandsdaten D_akt werden einer Datenverarbeitungseinheit 20 zugeführt, welche die für eine Datenverarbeitung üblichen Bestandteile wie etwa einen Mikroprozessor, Speicher und dergleichen enthält. In der Datenverarbeitungseinheit 20 sind Referenzdaten D_ref abgespeichert und bereitgestellt, welche einen Referenzzustand der Nutzeinheit 10 repräsentieren.

Die Referenzdaten D_ref wurden zeitlich vor den aktuellen Zustandsdaten D_akt generiert. Hierzu wird vorzugsweise dieselbe Wartungssensorik Sen-W1 und/oder Sen-W2 verwendet, welche bei identischen spezifischen Bedingungen (z.B. Belichtung, Lichtverhältnisse, Relativposition der Wartungssensorik Sen-W1 und/oder Sen-W2 zur Nutzeinheit 10) zuerst die Referenzdaten D_ref generiert und später während der Wartung die aktuellen Zustandsdaten D_akt generiert.

Die Datenverarbeitungseinheit 20 ist vorzugsweise in der Wartungsstation 12 integriert. In der Datenverarbeitungseinheit 20 werden die aktuellen Zustandsdaten D_akt mit den bereitgestellten Referenzdaten D_ref verglichen. Aus diesem Vergleich wird ein Vergleichsergebnis **Δ**comp erzielt, z.B. eine mathematische Differenz. Abhängig von dem ermittelten Vergleichsergebnis **Δ**comp gibt die Wartungsstation 12, insbesondere dessen Wartungseinheit 12-1, eine den aktuellen Zustand Stat_akt der Nutzeinheit 10 betreffende Information Info_akt aus.

Insbesondere wird im Sinne einer effizienten Kommunikation während der Zustandsüberprüfung die Information Info_akt nur dann ausgegeben, wenn das Vergleichsergebnis **Δ**comp einen Rückschluss auf einen nicht ordnungsgemäßen Zustand Stat_akt (z.B. reparaturbedürftig, reinigungsbedürftig, notwendiger Austausch eines Bauteils) der Nutzeinheit 10 gibt. Zu diesem Zweck wird bei der Ausführungsform des Verfahrens gemäß Fig. 1 geprüft, ob das Vergleichsergebnis **Δ**comp einen vorbestimmten Grenzwert **Δ**comp_lim überschreitet.

Bei Überschreiten des Grenzwertes **Δ**comp_lim wird in einer Anzeigeeinheit 22 die den nicht ordnungsgemäßen aktuellen Zustand Stat_akt der Nutzeinheit 10 betreffende Information Info_akt ausgegeben.

Die Anzeigeeinheit 22 ist vorzugsweise an der Wartungsstation 12 angeordnet und insbesondere als akustische (z.B. Sprachausgabe) und/oder optische (z.B. Bildschirm, Display) Anzeigeeinheit 22 ausgebildet. Mittels der Anzeigeeinheit 22 kann Servicepersonal, ein Fahrer der Nutzeinheit 10 oder eine andere Person informiert werden. In einer alternativen Ausführungsform ist die Anzeigeeinheit 22 außerhalb der Wartungsstation 12 angeordnet, beispielsweise dort, wo sich Servicepersonal, ein Fahrer der Nutzeinheit 10 oder eine andere Person während der Tätigkeit üblicherweise aufhält.

Die Überprüfung des aktuellen Zustandes Stat_akt der Nutzeinheit 10 anhand der aktuellen Zustandsdaten D_akt beinhaltet beispielsweise mindestens einen der folgenden Zustände:
- Schläuche der Nutzeinheit 10 auf etwaige Lecks hin untersuchen,
- den Zustand (z.B. Sauberkeit, Position, Ausrichtung) einer am Traktor 14 angeordneten Arbeitssensorik Sen-A überprüfen,
- einen allgemeinen optischen Zustand (z.B. zu reinigende Verschmutzungen nach einem Arbeitseinsatz) der Nutzeinheit 10 überprüfen,
- die Nutzeinheit 10 auf etwaige fehlende Bauteile hin überprüfen,
- Beschädigungen und/oder Verschleiß an der Nutzeinheit 10 feststellen.

In Fig. 1 sind zwei weitere Beispiele für die Überprüfung eines Verschleißes an der Nutzeinheit 10 offenbart. Dabei wird der aktuelle Verschleißzustand an dem Anbaugerät 16 (z.B. Bodenbearbeitungsgerät in Gestalt eines Pflugs) überprüft. Als aktuelle Zustandsdaten wird entweder der aktuelle Abstand d_akt einer Gerätekante zu einer (vorzugsweise eingravierten) Verschleißmarkierung des Anbaugerätes 10 generiert oder die aktuelle (Teil-) Existenz bzw. Nichtexistenz mark_akt der Verschleißmarkierung generiert. Die aktuellen Zustandsdaten sind beispielsweise Bilddaten, welche mittels der Wartungssensorik Sen-W1 bzw. Sen-W2 generiert werden.

Analog zu dem oben beschriebenen Verfahren wird in der Datenverarbeitungseinheit 20 der aktuelle Abstand d_akt mit Referenzdaten verglichen, welche einen Referenzabstand d_ref zwischen der Gerätekante und der Verschleißmarkierung bei der Herstellung des Anbaugerätes 16 repräsentieren. Das Vergleichsergebnis **Δ**comp gibt beispielsweise die Differenz d_ref - d_akt (z.B. in mm oder cm) und somit einen Verschleißgrad wieder. Ist dieser Verschleißgrad größer als ein vorbestimmter Grenzwert **Δ**comp_lim, wird eine spezifische Information Info_akt bezüglich des aktuellen Zustandes Stat_akt des Anbaugerätes 16 ausgegeben. Diese Information Info_akt enthält beispielsweise einen Hinweis über einen notwendigen Austausch des die Gerätekante aufweisenden Bauteils oder des gesamten Anbaugerätes 16 oder einen Hinweis über ein Zeitintervall für einen derartigen Austausch.

Weiter analog zu dem oben beschriebenen Verfahren wird in der Datenverarbeitungseinheit 20 der aktuelle Zustand der Verschleißmarkierung mark_akt mit Referenzdaten verglichen, welche die vollständige Existenz der Verschleißmarkierung mark_ref bei der Herstellung des Anbaugerätes 16 repräsentieren. Das Vergleichsergebnis **Δ**comp gibt Unterschiede (z.B. quantitativ und/oder qualitativ) zwischen der ursprünglichen Verschleißmarkierung mark_ref und dem aktuellen Zustand der Verschleißmarkierung mark_akt wieder. Überschreiten die Unterschiede einen vorbestimmten Grenzwert **Δ**comp_lim, wird eine spezifische Information Info_akt bezüglich des aktuellen Zustandes Stat_akt des Anbaugerätes 16 ausgegeben. Diese Information Info_akt enthält beispielsweise einen Hinweis über einen notwendigen Austausch des die Verschleißmarkierung aufweisenden Bauteils oder des gesamten Anbaugerätes 16 oder einen Hinweis über ein Zeitintervall für einen derartigen Austausch.

Im Zusammenhang mit dem Vergleichsergebnis **Δ**comp sei angemerkt, dass diese Größe - abhängig von unterschiedlichen zu überprüfenden aktuellen Zuständen oder einer unterschiedlichen Datenverarbeitung in der Datenverarbeitungseinheit 20 - stellvertretend für unterschiedliche Zahlenwerte und gegebenenfalls unterschiedliche physikalische Einheiten steht. Analoges gilt für den vorbestimmten Grenzwert **Δ**comp_lim, der immer an den jeweils zu überprüfenden aktuellen Zustand Stat_akt qualitativ und/oder quantitativ angepasst ist.

Die Wartungsstation 12 gemäß Fig. 2 unterscheidet sich von der Ausführungsform gemäß Fig. 1 dadurch, dass das Vergleichsergebnis **Δ**comp in einem neuronalen Netzwerk NN analysiert und verarbeitet wird, bevor eine Information Info_akt ausgegeben wird. Abhängig von der Datenanalyse in dem neuronalen Netzwerk NN wird entweder keine Information Info_akt ausgegeben oder eine den überprüften aktuellen Zustand Stat_akt betreffende spezifische Information Info_akt ausgegeben, z.B. über ein fehlendes Bauteil an der Nutzeinheit 10, über einen Beschädigungsstatus an der Nutzeinheit 10, über einen Verschleißstatus an der Nutzeinheit 10, über einen Zustand der Arbeitssensorik Sen-A an der Nutzeinheit 10.

Bei der Verfahrensdurchführung gemäß Fig. 3 weist die Wartungssensorik Sen-W1 und/oder Sen-W2 der Wartungsstation 12 mindestens eine RFID-Antenne auf. Die Wartungssensorik Sen-W1 und/oder Sen-W2 generiert aktuelle Zustandsdaten D_akt, welche eine aktuelle Liste list_akt mit den an der Nutzeinheit 10 aktuell existierenden RFID-Kennungen RFIDx (sogenannter RFID-Tag) von Bauteilen mit der Anzahl x enthalten. Die aktuelle Liste list_akt wird mit einer Referenzliste list_ref als bereitgestellte Referenzdaten verglichen. Die Referenzliste list_ref enthält die RFID-Kennungen RFID1-n der zu überprüfenden Bauteile mit der Anzahl n, wie sie bei der Herstellung der Nutzeinheit 10 existiert.

Der Inhalt der aktuellen Liste list_akt wird mit dem Inhalt der Referenzliste list_ref verglichen. Wenn das Vergleichsergebnis **Δ**comp einen vorbestimmten Grenzwert **Δ**comp_lim = 0 einnimmt, sind sämtliche erwarteten Bauteile mit der Anzahl n auch aktuell tatsächlich vorhanden. Weicht hingegen das Vergleichsergebnis **Δ**comp von dem vorbestimmten Grenzwert **Δ**comp_lim = 0 ab (**Δ**comp ≠ 0, Überschreitung oder Unterschreitung des Grenzwertes **Δ**comp_lim), wird eine spezifische Information Info_akt ausgegeben. Entsprechend der in der aktuellen Liste list_akt fehlenden RFID-Kennungen kann eindeutig über die fehlenden Bauteile als aktueller Zustand Stat_akt der Nutzeinheit 10 informiert werden.

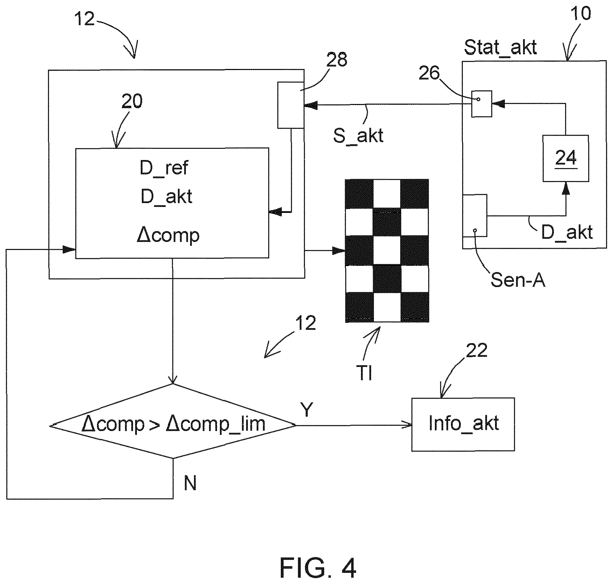

Fig. 4 zeigt eine Verfahrensvariante, bei der der aktuelle Zustand Stat_akt der Arbeitssensorik Sen-A der Nutzeinheit 10, insbesondere des Traktors 14, überprüft wird. Zu diesem Zweck empfängt die Arbeitssensorik Sen-A eine Testinformation TI (z.B. Testsignale, Testbild, bewegtes Testobjekt). Die Testinformation TI wird vorzugsweise von der Wartungsstation 12, entweder von der stationären Wartungseinheit 12-1 oder der mobilen Wartungseinheit 12-2, zur Verfügung gestellt.

Die von der Arbeitssensorik Sen-A auf Basis der Testinformation TI generierten aktuellen Zustandsdaten D_akt werden in einer Diagnoseeinheit 24 verarbeitet und dann an eine Datenausgangsschnittstelle 26 weitergeleitet. Von dort werden die aktuellen Zustandsdaten D_akt als verarbeitete Signale S_akt (vorzugsweise drahtlos) an eine Dateneingangsschnittstelle 28 der Wartungsstation 12 gesendet. Die Dateneingangsschnittstelle 28 ist mit der Datenverarbeitungseinheit 20 verbunden. In letzterer wird - wie bereits beschrieben - das Vergleichsergebnis **Δ**comp ermittelt, welches qualitative und/oder quantitative Abweichungen zwischen den Referenzdaten D_ref und den aktuellen Zustandsdaten D_akt wiedergibt.

Die Referenzdaten D_ref repräsentieren einen Referenzzustand der Arbeitssensorik Sen-A bezüglich der Testinformation TI. Mit anderen Worten werden von derselben Arbeitssensorik Sen-A in einem fehlerfreien Funktionszustand und bei identischen spezifischen Bedingungen (z.B. Belichtung, Lichtverhältnisse, Relativposition der Arbeitssensorik Sen-A zur Testinformation TI) die Referenzdaten D_ref auf Basis derselben empfangenen Testinformation TI generiert.

Sind die Abweichungen zwischen den Referenzdaten D_ref und den aktuellen Zustandsdaten D_akt gering, d.h. höchstens so groß wie der vorbestimmte Grenzwert **Δ**comp_lim, hat die Arbeitssensorik Sen-A einen akzeptablen Funktionszustand und es wird keine Information Info_akt ausgegeben. Sind die Abweichungen hingegen größer als der vorbestimmte Grenzwert **Δ**comp_lim, entspricht dies einem mangelhaften Funktionszustand der Arbeitssensorik Sen-A und die Anzeigeeinheit 22 gibt eine entsprechende Information Info_akt aus.

Geeignete Sensoren für die Arbeitssensorik Sen-A sind beispielsweise optische Sensoren (insbesondere mindestens eine Kamera), UV-Sensoren, Ultraschall-Sensoren, Radar-Sensoren, Antennen, insbesondere RFID-Antennen.

Fig. 5 zeigt eine Verfahrensvariante, bei der der aktuelle Zustand Stat_akt der Wartungssensorik Sen-W1 und/oder Sen-W2 der Wartungsstation 12 überprüft wird. Es handelt sich hierbei also um eine Eigendiagnose der Wartungsstation 12. Zu diesem Zweck empfängt die Wartungssensorik Sen-W1 eine Prüfinformation PI-1 und/oder die Wartungssensorik Sen-W2 empfängt eine Prüfinformation PI-2. Bei den Prüfinformationen PI-1, PI-2 handelt es sich beispielsweise um Prüfsignale, Prüfbilder, bewegte Prüfobjekte.

Die Wartungssensorik Sen-W1 und/oder Sen-W2 generiert aktuelle Zustandsdaten D_akt (z.B. Bilddaten) auf Basis der empfangenen Prüfinformation PI-1 und/oder PI-2. Die aktuellen Zustandsdaten D_akt werden der Datenverarbeitungseinheit 20 zugeführt, die diese mit den Referenzdaten D_ref vergleicht.

Die Referenzdaten D_ref repräsentieren einen Referenzzustand der Wartungssensorik Sen-W1 und/oder Sen-W2 bezüglich der Prüfinformation PI-1 und/oder PI-2. Mit anderen Worten werden von derselben Wartungssensorik Sen-W1 und/oder Sen-W2 in einem fehlerfreien Funktionszustand und bei identischen spezifischen Bedingungen (z.B. Belichtung, Lichtverhältnisse, Relativposition der Wartungssensorik Sen-W1 und/oder Sen-W2 zur Prüfinformation PI-1 und/oder PI-2) die Referenzdaten D_ref auf Basis derselben empfangenen Prüfinformation PI1 und/oder PI-2 generiert.

Im Falle der stationären Wartungssensorik Sen-W1 wird vor deren Zustandsüberprüfung vorzugsweise die Prüfinformation PI-1 relativ zu der Wartungssensorik Sen-W1 bewegt. Im Falle der mobilen Wartungssensorik Sen-W2 wird vor deren Zustandsüberprüfung vorzugsweise die mobile Wartungseinheit 12-2 relativ zu der Prüfinformation 12-2 bewegt.

In der Datenverarbeitungseinheit 20 wird das Vergleichsergebnis **Δ**comp ermittelt, welches qualitative und/oder quantitative Abweichungen zwischen den Referenzdaten D_ref und den aktuellen Zustandsdaten D_akt wiedergibt. Sind die Abweichungen zwischen den Referenzdaten D_ref und den aktuellen Zustandsdaten D_akt gering, d.h. höchstens so groß wie der vorbestimmte Grenzwert **Δ**comp_lim, hat die Wartungssensorik Sen-W1 und/oder Sen-W2 einen akzeptablen Funktionszustand und es wird keine Information Info_akt ausgegeben. Sind die Abweichungen hingegen größer als der vorbestimmte Grenzwert **Δ**comp_lim, entspricht dies einem mangelhaften Funktionszustand der Wartungssensorik Sen-W1 und/oder Sen-W2. Die Anzeigeeinheit 22 gibt dann eine entsprechende Information Info_akt betreffend des aktuellen Zustandes Stat_akt der Wartungsstation 12 aus.

Neben der in Zusammenhang mit Fig. 4 bzw. Fig. 5 beschriebenen Diagnose der Arbeitssensorik Sen-A bzw. der Wartungssensorik Sen-W1, Sen-W2 kann die ausgegebene Information Info_akt auch einen Zustand einer (nicht gezeigten) Aktuatorik an der Nutzeinheit 10 und/oder einen Zustand einer (nicht gezeigten) Aktuatorik an der Wartungsstation 12 betreffen. Der aktuelle Zustand der Aktuatorik bezieht sich hierbei auf eine Abweichung von einem spezifikationsgemäß zu erwartenden Betriebsverhalten der Aktuatorik als Referenzzustand. Hierzu werden von der Diagnoseeinheit 24 entsprechende Befehle an die Aktuatorik gesendet sowie deren Reaktion mittels der Datenverarbeitungseinheit 20 erfasst. Im Falle einer als Traktor 14 ausgebildeten mobilen Nutzeinheit 12 handelt es sich bei der Aktuatorik beispielsweise um ein Hubwerk in Gestalt eines hydraulischen Krafthebers oder eine Zapfwelle bzw. einen Zapfwellenantrieb.

Der Vollständigkeit halber sei darauf hingewiesen, dass in den Zeichnungen offenbarte Details zumindest teilweise lediglich schematisch und nicht notwendigerweise maßstabsgerecht dargestellt sind.

## Patentansprüche

1. Verfahren zur Überprüfung eines aktuellen Zustandes (Stat_akt) einer mobilen Nutzeinheit (10) mittels einer Wartungsstation (12) oder eines aktuellen Zustandes (Stat_akt) einer Wartungsstation (12) zur Wartung einer mobilen Nutzeinheit (10), wobei
- einen aktuellen Zustand (Stat_akt) repräsentierende aktuelle Zustandsdaten (D_akt, d_akt, mark_akt, list_akt) generiert werden,
- die aktuellen Zustandsdaten (D_akt, d_akt, mark_akt, list_akt) mit bereitgestellten und einen Referenzzustand repräsentierenden Referenzdaten (D_ref, d_ref, mark_ref, list_ref) verglichen werden, und
- in Abhängigkeit von einem Ergebnis des Vergleichs (Δcomp) eine den aktuellen Zustand (Stat_akt) betreffende Information (Info_akt) ausgegeben wird.

2. Verfahren nach Anspruch 1, **dadurch gekennzeichnet, dass** eine Information (Info_akt) ausgegeben wird, wenn das Vergleichsergebnis (**Δ**comp) einen vorbestimmten Grenzwert (**Δ**comp_lim) überschreitet oder unterschreitet.

3. Verfahren nach Anspruch 1 oder 2, **dadurch gekennzeichnet, dass** das Vergleichsergebnis (**Δ**comp) in einem neuronalen Netzwerk (NN) verarbeitet wird, bevor eine Information (Info_akt) ausgegeben wird.

4. Verfahren nach wenigstens einem der vorhergehenden Ansprüche, **dadurch gekennzeichnet, dass** die Information (Info_akt) mindestens einen der folgenden aktuellen Zustände (Stat_akt) betrifft:
- ein fehlendes Bauteil (RFIDx) an der Nutzeinheit (10),
- einen Beschädigungsstatus an der Nutzeinheit (10),
- einen Verschleißstatus an der Nutzeinheit (10),
- einen Zustand einer Sensorik (Sen-A) an der Nutzeinheit (10),
- einen Zustand einer Sensorik (Sen-W1, Sen-W2) an der Wartungsstation (12),
- einen Zustand einer Aktuatorik an der Nutzeinheit (10),
- einen Zustand einer Aktuatorik an der Wartungsstation (12) .

5. Verfahren nach wenigstens einem der vorhergehenden Ansprüche, **dadurch gekennzeichnet, dass** der aktuelle Zustand (Stat_akt) mittels einer Sensorik (Sen-W1, Sen-W2) überprüft wird.

6. Verfahren nach Anspruch 5, **dadurch gekennzeichnet, dass** die Sensorik (Sen-W1, Sen-W2) an der Wartungsstation (12) angeordnet ist und aktuelle Zustandsdaten (D_akt) generiert, welche einen aktuellen Zustand (Stat_akt, d_akt, mark_akt, list_akt) der Nutzeinheit (10) repräsentieren, wobei die bereitgestellten Referenzdaten (D_ref) einen Referenzzustand (d_ref, mark_ref, list_ref) der Nutzeinheit (10) repräsentieren.

7. Verfahren nach Anspruch 6, **dadurch gekennzeichnet, dass** von der Sensorik (Sen-W1, Sen-W2) generierte aktuelle Zustandsdaten (D_akt)eine aktuelle Liste (list_akt) mit Kennungen (RFIDx) von Bauteilen der Nutzeinheit (10) enthalten und bereitgestellte Referenzdaten (D_ref) eine Referenzliste (list_ref) der Kennungen (RFID1-n) von Bauteilen in einem Referenzzustand der Nutzeinheit (10) enthalten.

8. Verfahren nach wenigstens einem der vorhergehenden Ansprüche, **dadurch gekennzeichnet, dass** der aktuelle Zustand einer Sensorik (Sen-A, Sen-W1, Sen-W2) überprüft wird.

9. Verfahren nach Anspruch 8, **dadurch gekennzeichnet, dass**
- die Sensorik (Sen-W1, Sen-W2) an der Wartungsstation (12) angeordnet ist und in Abhängigkeit von einer empfangenen Prüfinformation (PI-1, PI-2) aktuelle Zustandsdaten (D_akt) generiert, und
- die bereitgestellten Referenzdaten (D_ref) einen Referenzzustand der Sensorik (Sen-W1, Sen-W2) bezüglich derselben empfangenen Prüfinformation (PI-1, PI-2) repräsentieren.

10. Verfahren nach Anspruch 8, **dadurch gekennzeichnet, dass**
- die Sensorik (Sen-A) an der Nutzeinheit (10) angeordnet ist und in Abhängigkeit von einer empfangenen Testinformation (TI) aktuelle Zustandsdaten (D_akt) generiert, und
- die bereitgestellten Referenzdaten (D_ref) einen Referenzzustand der Sensorik (Sen-A) bezüglich derselben empfangenen Testinformation (TI) repräsentieren.

11. Verfahren nach wenigstens einem der Ansprüche 5 bis 10, **dadurch gekennzeichnet, dass** die Sensorik (Sen-A, Sen-W1, Sen-W2) einen optischen Sensor und/oder einen UV-Sensor und/oder einen Ultraschall-Sensor und/oder einen Radar-Sensor und/oder eine Antenne, insbesondere eine RFID-Antenne, enthält.

12. Verfahren nach wenigstens einem der vorhergehenden Ansprüche, **dadurch gekennzeichnet, dass**
- der Vergleich zwischen den aktuellen Zustandsdaten (D_akt) und den bereitgestellten Referenzdaten (D_ref) in der Wartungsstation (12) durchgeführt wird, und/oder
- die den aktuellen Zustand (Stat_akt) betreffende Information (Info_akt) durch die Wartungsstation (12) ausgegeben wird.

13. Verfahren nach wenigstens einem der vorhergehenden Ansprüche, **gekennzeichnet durch** ein Nutzfahrzeug (14) und/oder ein Anbaugerät (16) als mobile Nutzeinheit (10) .

14. Verfahren nach Anspruch 13, **dadurch gekennzeichnet, dass** das Nutzfahrzeug (14) ein autonomes Fahrzeug ist.

15. Verfahren nach wenigstens einem der vorhergehenden Ansprüche, **dadurch gekennzeichnet, dass** die Wartungsstation (12) eine mobile Wartungseinheit (12-2) enthält oder aus einer mobilen Wartungseinheit (12-2) besteht.
